# EUROPÄISCHE PATENTANMELDUNG

(11) **EP 1 816 142 A2**
(43) Veröffentlichungstag der Anmeldung: **08.08.2007**
(21) Anmeldenummer: 07101058.1
(22) Anmeldetag: 24.01.2007
(51) Int. Cl.: C08B 37/00, F26B 3/00, C08J 3/12

(54) **Verfahren zur Bereitstellung eines Verdickungsmittels auf Basis von Polysacchariden**

(30) Priorität: 03.02.2006 DE 10605385
(71) Anmelder: Gebr. Lödige Maschinenbau Gesellschaft mbH, D-33102 Paderborn (DE)
(72) Erfinder: Meyer, Thomas, 33106, Paderborn (DE)
(74) Vertreter: Gille Hrabal Struck Neidlein Prop Roos

(57) **Zusammenfassung**

Die Erfindung betrifft eine Verfahren zur Breitstellung eines Verdickungsmittels auf Basis eines Polysaccharids sowie eine Vorrichtung zur Durchführung des Verfahrens. Verfahrensgemäß wird zur Erzielung einer gewünschten Verdickungswirkung ein Polysaccharid thermisch behandelt und dabei in einem Mischer gemischt.

Ein Mischer zur Durchführung des Verfahrens ist zumindest überwiegend doppelwandig zur Temperierung ausgestaltet, Der Innenraum kann gasdicht verschlossen werden.

## Beschreibung

Die Erfindung betrifft eine Verfahren zur Breitstellung eines Verdickungsmittels auf Basis eines Polysaccharids sowie eine Vorrichtung zur Durchführung des Verfahrens.

Polysaccharide bzw. Vielfachzucker sind komplexe Mehrfach- bzw. Vielfachzucker bestehend aus langen, beispielsweise bis zu 500 oder aber auch mehreren 1000 Einfachzuckermolekülen. Zu den Polysacchariden zählen Schleimstoffe, Stärkearten und Pektine. Ein bekannter Vielfachzucker ist Stärke, die nur in Pflanzen gebildet wird. Sie wird in verschiedenen Pflanzenteilen als Energiereserve gespeichert. Langkettige Polysaccharide sind im Gegensatz zu Mono- und Disacchariden grundsätzlich nicht in kaltem Wasser löslich. Polysaccharide können im Wasser aufquellen. Es resultiert eine Mischung aus Wasser und Polysacchariden mit einer im Vergleich zu Wasser relativ hohen Viskosität.

Die Viskosität einer solchen Mischung kann bei gleich bleibender Trockensubstanz erniedriget werden, indem die Kettenlängen der Polysaccharide reduziert werden. Auf diese Weise kann ferner Einfluß auf Farbe und Geschmack genommen werden. Kettenlängen können u. a. durch Zufuhr von Wärme reduziert werden. Problematisch ist allerdings, dass Polysaccharide schmelzen können und dann das gewünschte Ergebnis nicht erreicht wird. Es ist daher z. B. erforderlich, ein partikelförmiges Polysaccharid bei relativ geringer Temperatur von beispielsweise 1 15 °C viele Stunden lang, so zum Beispiel wenigstens 14 Stunden lang thermisch zu behandeln, um durch Reduzierung von Kettenlängen die vorgenannte Viskosität zu reduzieren, ohne die Struktur des Produkts augenfällig zu ändern - also zum Beispiel in den geschmolzenen Zustand überzugehen.

Es ist Aufgabe der Erfindung, verbessert die Viskosität, Farbe und/ oder Geschmack im eingangs genannten Sinn reduzieren bzw. verändern zu können. Die Aufgabe wird vor allem durch ein Verfahren mit den Merkmalen des ersten aber auch des zweiten Anspruchs gelöst. Vorteilhafte Ausgestaltungen ergeben sich aus den Unteransprüchen.

Verfahrensgemäß wird die Kettenlänge beschleunigt reduziert, indem ein Polysaccharid während der thermischen Behandlung gemischt wird und zwar vorzugsweise in einem Pflugscharmischer. Ein solcher Pflugscharmischer wird vor allem von der Firma Gebrüder Lödige Maschinenbau-Gesellschaft aus Paderborn, Deutschland, kommerziell vertrieben und ist beispielsweise aus der Druckschrift DE 3219859 A1 bekannt. Ein solcher Mischer zeichnet sich durch pflugscharartige Mischwerkzeuge aus, die mit einer zentralen Welle verbunden sind.

Ein Pflugscharmischer ist zu bevorzugen, da in einem solchen Pflugscharmischer die Partikel durch Rotation der Mischelemente so in Bewegung versetzt werden, dass ein mechanisch erzeugtes, aufgelockertes Wirbelbett der Partikel entsteht. In einem solchen zwangsgeführten Wirbelbett erreicht man eine optimale Durchmischung und auch eine Temperaturverteilung ohne Temperaturgradienten bei Energieeinleitung von außen z.B. über einen Doppelmantel. Dadurch sind im Mantel höhere Temperaturen möglich als dies in einem statischen System möglich sind, da alle Partikel sehr gleichmäßig durch häufigen aber kurzen Wandkontakt erwärmt werden.

Ein Polysaccharid wird in feinstückiger oder pulveriger Form in den Mischer gegeben und der Mischer während der thermischen Behandlung in Betrieb genommen. Die Energiezufuhr erfolgt dabei vorzugsweise gleichmäßig über die Wände des Mischers, so zum Beispiel über einen entsprechend temperierten Doppelmantel. Die Zwangsbewegung des Ausgangsprodukts im Mischer sorgt für eine extrem gleichmäßige Temperaturverteilung, ohne einen Temperaturgradienten innerhalb des Mischgutbettes, also innerhalb des Pulvers bzw. des feinstückigen Polyssacharid entstehen zu lassen. Es gelingt so, relativ hohe Temperaturen auf das Mischgut einwirken zu lassen. Insgesamt kann die erforderliche thermische Behandlung ohne weiteres um einen Faktor 10 zeitlich reduziert werden, um zum gewünschten Endprodukt zu gelangen.

In einer vorteilhaften Ausgestaltung der Erfindung findet die thermische Behandlung von Polysaccharid in einem gasdicht verschlossenen Mischer statt. Durch diese Ausgestaltung wird erreicht, dass natürlich vorhandenes Wasser als Wasserdampf im Mischer während der thermischen Behandlung verbleibt, wenn Temperaturen oberhalb von 100 °C eingestellt werden. Dies beschleunigt weiter verbessert die Reduzierung der Kettenlänge, Die erforderliche Behandlungszeit kann so weiter verkürzt werden. Dies eröffnet allerdings auch die Möglichkeit, die thermische Behandlung bei Unterdruck durchzuführen, was zwar die erforderliche Behandlungsdauer verlängert, dafür aber produktschonender abläuft.

In einer weiteren vorteilhaften Ausgestaltung wird eine Wasserdampfatmosphäre während der thermischen Behandlung erzeugt und dabei so gesteuert, dass ein Schmelzen des Mischguts im freien, heißen Wasser vermieden wird. Je nach Feuchte des Ausgangsprodukts wird also während des Mischen Wasserdampf aus dem Mischer entfernt oder Wasser zugegeben, um einen gewünschten Wasserdampfgehalt aufrechterhalten zu können. Der Wasserdampfgehalt wird dabei auf der einen Seite vorzugsweise möglichst hoch eingestellt, wobei die Grenze überschritten ist, wenn das Mischgut schmilzt. Es gilt also, diese Grenze nicht zu überschreiten, die vom jeweils gewählten Produkt abhängt.

Musste also ein Polysaccharid ursprünglich bei 115°C für 14 Stunden thermisch behandelt werden, so genügt bei dieser Ausgestaltung der Erfindung eine einstündige thermische Behandlung bei 130°C in einer Wasserdampfatmosphäre bei einem Druck von drei bar, um zum gleichen Ergebnis bezüglich der eingangs genannten Viskosität zu gelangen. Die relative Luftfeuchte beträgt beispielsweise mehr als 90% vorzugsweise 100%. Eine zweckmäßige Mindestdauer der thermischen Behandlung beträgt beispielsweise 10 Minuten, vorzugsweise 30 Minuten.

Um eine feinkörnige oder pulverförmige Struktur verbessert aufrecht erhalten zu können, befinden sich innerhalb des Mischers vorteilhaft Messer oder dergleichen, mit der Mischgut während des Mischens zerkleinert werden kann Beispielsweise Johannisbrotkernmehl, Guar oder Carrageen werden nach dem erfindungsgemäßen Verfahren behandelt, um eine gewünschte Viskosität einzustellen. Das verfahrensgemäß behandelte Polysaccharid wird insbesondere als Verdickungsmittel beispielsweise in Getränken eingesetzt, um so einem Getränk eine schwache Struktur zu verleihen, ohne dass das Getränk zähflüssig wird.

In einem Ausführungsbeispiel wurden pulverförmiges Johannisbrotkernmehl, Guar, Gummiarabicum oder Carrageen in einen Pflugscharmischer der Firma Lödige gegeben und eine Stunde lang bei einer Temperatur von schätzungsweise 130°C in einer Wasserdampfatmosphäre von 100% relative Luftfeuchtigkeit behandelt. Zu diesem Zweck wurden die Wände des Mischers auf 160 °C erhitzt. Der Mischer war gasdicht verschlossen. Der Wasserdampf wurde so reguliert, dass der Gehalt an frei verfügbarem Wasser nicht derart stark anstieg, dass das Mischgut zu schmelzen begann. Es resultierte ein Produkt, mit dem die Viskosität einer Flüssigkeit in gleicher Weise eingestellt werden konnte wie bei einer vierzehnstündigen thermischen Behandlung bei 115°C in eingangs genannter Weise.

Die Steuerung des Wassergehalts in Abhängigkeit von der Temperatur erfolgt in besonders einfacher Weise über die Leistungsentwicklung des Mischwerks.

In einem weiteren Versuch wurde die thermische Behandlung wie vorbeschrieben durchgeführt. Dabei wurde allerdings ein Unterdruck erzeugt. Zwar wurde so die erforderliche Behandlungszeit auf zwei bis drei Stunden verlängert. Die gewünschte Pulverform wurde so aber optimal aufrecht erhalten. Im Vergleich zur eingangs genannten Behandlung wurde ein beträchtlicher Zeitgewinn erzielt.

## Patentansprüche

1. Verfahren zur Bereitstellung eines Verdickungsmittels, indem ein feinkörniges oder pulverförmiges Polysaccharid in einem Mischer gemischt und dabei thermisch behandelt wird, **dadurch gekennzeichnet, dass** die thermische Behandlung in einer Wasserdampfatmosphäre durchgeführt wird, wobei die relative Luftfeuchtigkeit mehr als 90% beträgt, wobei die Wasserdampfatmosphäre so eingestellt oder gesteuert wird, dass das Polysaccharid nicht in Schmelze überführt wird.

2. Verfahren zur Bereitstellung eines Verdickungsmittels, indem ein feinkörniges oder pulverförmiges Polysaccharid in einem Mischer gemischt und dabei thermisch behandelt wird und zwar insbesondere bei Temperaturen von mehr als 100 °C.

3. Verfahren nach Anspruch 1 oder 2, bei dem die thermische Behandlung in einem Mischer durchgeführt wird, der gasdicht verschlossen ist.

4. Verfahren nach Anspruch 2, bei dem die thermische Behandlung in einer Wasserdampfatmosphäre durchgeführt wird, wobei die relative Luftfeuchtigkeit insbesondere mehr als 90%, besonders bevorzugt 100% beträgt.

5. Verfahren nach dem vorhergehenden Anspruch, bei dem die Wasserdampfatmosphäre so eingestellt oder gesteuert wird, dass das Polysaccharid nicht in Schmelze überführt wird.

6. Verfahren nach einem der vorhergehenden Ansprüche, bei dem die thermische Behandlung spätestens nach drei Stunden, vorzugsweise spätestens nach einer Stunde beendet wird.

7. Verfahren nach einem der vorhergehenden Ansprüche, bei dem Johannisbrotkernmehl, Guar, Gummiarabicum oder Carrageen als Polysaccharid eingesetzt wird.

8. Verfahren nach einem der vorhergehenden Ansprüche, bei dem Doppelwandungen des Mischers zwecks thermischer Behandlung erhitzt werden und zwar durch Einleitung einer heißen Flüssigkeit zwischen zwei Wände einer Doppelwandung, wobei vorzugsweise die eingeleitete Flüssigkeit 90 bis 200 °C heiß ist.

9. Verfahren nach einem der vorhergehenden Ansprüche, bei dem das Polysaccharid im Anschluss an die thermische Behandlung als Verdickungsmittel in einer Flüssigkeit eingesetzt wird.

10. Mischer zur Durchführung eines Verfahrens nach einem der vorhergehenden Ansprüche, der zumindest überwiegend doppelwandig zur Temperierung ausgestaltet ist und dessen Innenraum gasdicht verschlossen werden kann.

11. Mischer nach dem vorhergehenden Anspruch, wobei der Mischer ein Flugscharmischer ist, der vorzugsweise Zerkleinerungswerkzeuge wie Messer im Innenraum aufweist.
